# DEMANDE DE BREVET EUROPEEN

(11) **EP 2 106 973 A1**
(43) Date de publication de la demande: **07.10.2009**
(21) Numéro de dépôt: 08154042.9
(22) Date de dépôt: 03.04.2008
(51) Int. Cl.: B60R 16/027, H01R 35/02

(54) **Module de commande sous volant et méthode d'assemblage associée**

(71) Demandeur: Delphi Technologies, Inc., Troy, Michigan 48007 (US)
(72) Inventeur: Tual, Nicolas, 67100, Strasbourg (FR); Biacchi, Michael, 67440, Lochwiller (FR)
(74) Mandataire: Robert, Vincent

(57) **Abrégé**

L'invention propose un module de commande sous volant prévu pour arc assemblé sur une colonne de direction, notamment de véhicule automobile, comportant un boîtier (14) sur lequel est monté un contacteur électrique rotatif (16) qui comprend un rotor et un stator, du type comportant un manchon d'indexation angulaire (38) qui est mobile entre une position d'indexation dans laquelle il bloque le rotor dans une position angulaire déterminée par rapport au stator, et une position neutre dans laquelle le rotor peut tourner par rapport au stator, caractérisé en ce qu'il comporte un capot amovible qui est agencé sur le module de commande sous volant de manière à envelopper le tronçon d'extrémité axiale supérieure du manchon d'indexation en vue d'empêcher l'accès au manchon d'indexation.

## Description

### DOMAINE TECHNIQUE

La présente invention concerne un module de commande sous volant et une méthode d'assemblage de ce module sur une colonne de direction de véhicule automobile.

### ARRIERE-PLAN TECHNOLOGIQUE DE L'INVENTION

La présente invention concerne plus particulièrement un module de commande sous volant qui comprend un boîtier ou support sur lequel est monté un contacteur électrique rotatif et qui est prévu pour être assemblé sur une colonne de direction. Un tel type de module de commande sous volant est décrit notamment dans le document FR2829071.

Le contacteur électrique rotatif, également appelé contact tournant, est un dispositif assurant la liaison électrique entre deux corps respectivement fixe et mobile animés d'un mouvement relatif de rotation. Un tel dispositif est employé dans les colonnes de direction des véhicules pour permettre la connexion électrique entre des éléments situés dans le volant, et par conséquent mobiles en rotation, et un circuit fixe câblé dans l'habitacle desdits véhicules.

Un contacteur électrique rotatif est configuré de telle manière que la partie fixe, dite stator, et la partie mobile, dite rotor, définissent entre elles un espace annulaire d'axe confondu à l'axe de rotation, dans lequel est enroulé en spirale un câble plat flexible véhiculant plusieurs lignes conductrices. Cet espace annulaire comporte notamment deux parois d'allure parallèle à l'axe de rotation auxquelles sont fixées les deux extrémités du câble plat.

Un tel exemple de contacteur électrique tournant est décrit et représenté plus en détail dans le document EP1320153.

Le contacteur électrique tournant est généralement pré-assemblé sur le boîtier, puis le module de commande sous volant complet est acheminé vers la ligne d'assemblage où il est monté sur la colonne de direction. Pendant cette phase d'acheminement, il est nécessaire de bloquer le rotor en rotation par rapport au stator, de manière qu'il soit maintenu dans une position angulaire médiane ou « point milieu » correspondant à la position angulaire médiane de la colonne de direction sur laquelle il doit être monté.

Ce blocage en rotation est réalisé au moyen d'un manchon d'indexation qui est agencé coaxialement à l'intérieur du contacteur électrique rotatif, qui est lié en rotation au rotor, et qui comporte des moyens d'indexation angulaire coopérant avec une partie fixe du module. Le manchon d'indexation comporte, par exemple, un doigt d'indexation susceptible de coopérer avec une encoche d'indexation associée agencée sur une partie fixe tel que le stator. Le manchon d'indexation est monté coulissant axialement dans le contacteur électrique rotatif et il est sollicité axialement vers sa position d'indexation, vers le haut, par un ressort.

Le manchon d'indexation est normalement suffisant pour bloquer le rotor en rotation jusqu'à son assemblage sur la colonne. Lors du montage du volant sur la colonne, le manchon d'indexation est repoussé axialement vers le bas, à l'encontre de son ressort, jusqu'à une position neutre, de sorte que le doigt d'indexation sort de son encoche d'indexation et que le rotor soit libre en rotation par rapport au stator.

Cependant, entre l'étape de pré-assemblage du module de commande sous volant et l'étape de montage sur la colonne de direction, il arrive que le manchon d'indexation soit déplacé accidentellement vers sa position neutre ce qui conduit à une incertitude sur la position angulaire du rotor lors du montage du volant, le maintien du rotor dans sa position médiane n'étant plus assuré. Les conséquences peuvent être que, après le montage du volant sur la colonne, le conducteur électrique souple, qui s'étend dans l'espace radial entre le rotor et le stator, peut se retourner lorsque le volant vient en butée gauche ou il peut même s'arracher lorsque le volant vient en butée droite.

Pour résoudre ce problème, il a été proposé de monter une clé de verrouillage sur le boîtier. Cette clé est fixée sur le boîtier et elle comprend des surfaces de butée qui coopèrent avec des ergots prévus sur le bord périphérique du rotor pour le bloquer angulairement. Ainsi, même si le manchon d'indexation est déplacé accidentellement, le rotor est toujours maintenu dans sa position médiane par la clé de verrouillage. La clé peut être retirée une fois que le module de commande est monté sur la colonne de direction, juste avant le montage du volant.

### RESUME DE L'INVENTION

La présente invention vise à proposer une alternative à la clé de verrouillage qui permette d'assurer une parfaite indexation angulaire du rotor par rapport au stator jusqu'à son assemblage sur la colonne.

Dans ce but, l'invention propose un module de commande sous volant du type mentionné précédemment, **caractérisé en ce qu**'il comporte un capot amovible qui est agencé sur le module de commande sous volant de manière à envelopper le tronçon d'extrémité axiale supérieure du manchon d'indexation en vue d'empêcher l'accès au manchon d'indexation.

Le capot selon l'invention permet d'empêcher l'accès au manchon d'indexation entre l'étape d'assemblage du module de commande sous volant et l'étape de montage du volant sur la colonne de direction. En particulier, l'accès au manchon d'indexation est empêché pendant les étapes d'acheminement du module jusqu'à la ligne d'assemblage sur la colonne de direction. L'accès au manchon d'indexation n'est permis au dernier moment, juste avant le montage du volant. Le capot joue ainsi le rôle d'une goupille de sécurité.

En plus de permettre l'indexation angulaire du rotor par rapport au stator, l'invention permet d'assurer un meilleur guidage axial du module lors de son assemblage sur la colonne. En effet, lors du montage du module de commande sous volant sur la colonne, la cloison tubulaire interne du capot de protection assure le centrage et l'alignement axial du module par rapport à la colonne de direction. Auparavant, avec les solutions de l'art antérieur, du fait des tolérances de fabrication, notamment sur le diamètre de la colonne de direction, il arrivait fréquemment que le module de commande sous volant soit monté avec une inclinaison non souhaitée par rapport à l'axe de la colonne de direction.

Selon d'autres caractéristiques de l'invention :
- le capot comporte des moyens d'emboîtement pour sa fixation de manière amovible sur un élément du module de commande ;
- les moyens d'emboîtement coopèrent avec des moyens complémentaires agencés sur le contacteur électrique rotatif ;
- les moyens d'emboîtement sont agencés sur une cloison tubulaire externe du capot qui est insérée axialement entre le rotor et le manchon d'indexation ;
- le capot comporte des moyens de guidage axial qui coopèrent avec une portion de la colonne de direction pour guider le module lors de son assemblage sur la colonne de direction ;
- les moyens de guidage axial sont constitués par une cloison tubulaire interne qui est prévue pour coopérer avec une portion de la colonne de direction ;
- le capot comporte un moyen de préhension permettant d'exercer une traction sur le capot pour le retirer du module.

L'invention propose aussi une méthode d'assemblage d'un module de commande sous volant et d'un volant sur une colonne de direction, le module de commande sous volant étant réalisé selon les enseignements précédents, **caractérisée en ce qu**'elle comporte les étapes suivantes :
- montage axial du module sur le tronçon d'extrémité axiale supérieure de la colonne de direction en utilisant le capot comme moyen de guidage axial et d'alignement axial du module par rapport à la colonne,
- retrait du capot,
- montage du volant sur la colonne en faisant coulisser axialement le manchon d'indexation vers sa position neutre libérant le rotor en rotation.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue éclatée en perspective qui représente un module de commande sous volant comprenant un capot selon l'invention,
- la figure 2 est une vue en coupe axiale qui représente le module de la figure 1,
- la figure 3 est une vue en perspective qui représente le capot de la figure 1.

### DESCRIPTION DES MODES DE REALISATION PREFERES

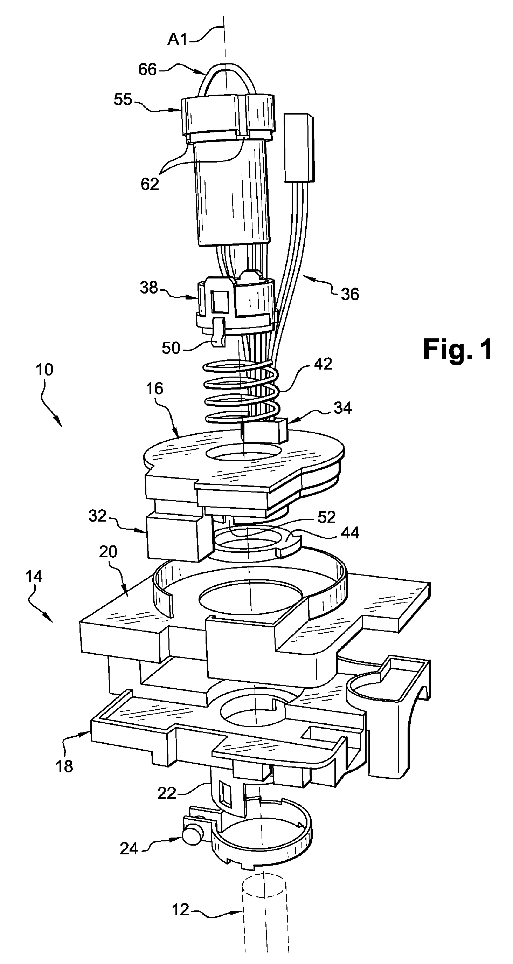

Sur la figure 1 on a représenté un module 10 de commande sous volant réalisé conformément aux enseignements de l'invention et prévu pour être monté coaxialement sur une colonne de direction 12 d'axe A1. Il comporte un boîtier 14 ou support sur lequel est monté un contacteur électrique rotatif 16.

Dans la suite de la description, on utilisera à titre non limitatif une orientation verticale suivant l'axe A1 de la colonne de direction 12.

Le boîtier 14 comporte ici une coque inférieure 18 et une coque supérieure 20 qui sont fixées l'une sur l'autre. La face supérieure de la coque supérieure 20 forme une platine qui reçoit le contacteur électrique rotatif 16. La coque inférieure 18 comporte une extension tubulaire inférieure 22 qui est prévue pour être montée sur un tronçon de la colonne de direction 12 et maintenue au moyen d'un collier de serrage 24.

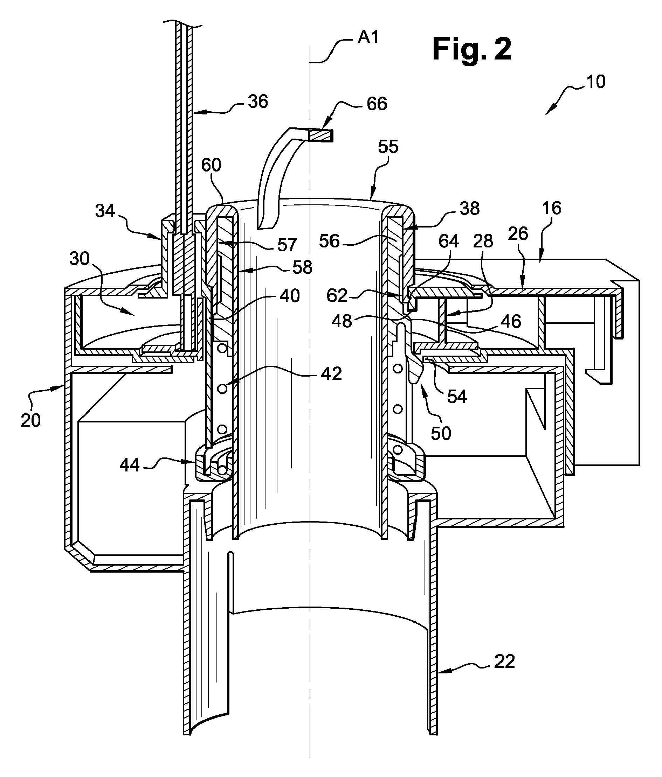

Comme représenté plus en détail sur la figure 2, le contacteur électrique rotatif 16 comporte un stator 26 qui est fixé sur la coque supérieure 20 du boîtier 14 et un rotor 28 qui est monté à rotation sur le stator 26 en délimitant un espace radial 30 prévu pour recevoir des conducteurs électriques souples (non représentés) liés d'un côté à un connecteur fixe 32 sur le stator 26 et du côté opposé à un connecteur rotatif 34 sur le rotor 28. Le connecteur rotatif 34 est ici pourvu de câbles électriques 36 pour le raccordement à des dispositifs électroniques (non représentés) du volant prévu pour être monté sur la colonne 12.

Un manchon d'indexation 38 est agencé coaxialement à l'intérieur du contacteur électrique rotatif 16. Le manchon d'indexation 38 est guidé en coulissement axial le long de la paroi axiale interne 40 du rotor 28. Il est sollicité axialement vers le haut, c'est-à-dire vers sa position d'indexation, par un ressort 42 qui prend appui sur une coupelle inférieure 44 fixée dans le boîtier 14. Le manchon d'indexation 38 comporte une surface radiale 46 qui vient en appui axial contre une surface de butée 48 agencée sur le rotor 28. Le manchon d'indexation 38 comporte un doigt ou clip d'indexation 50 qui s'étend radialement à travers une fente axiale 52 aménagée dans la paroi axiale interne 40 du rotor 28 et qui est reçu, en position d'indexation angulaire, dans une encoche d'indexation 54 aménagée dans la paroi périphérique interne du stator 26.

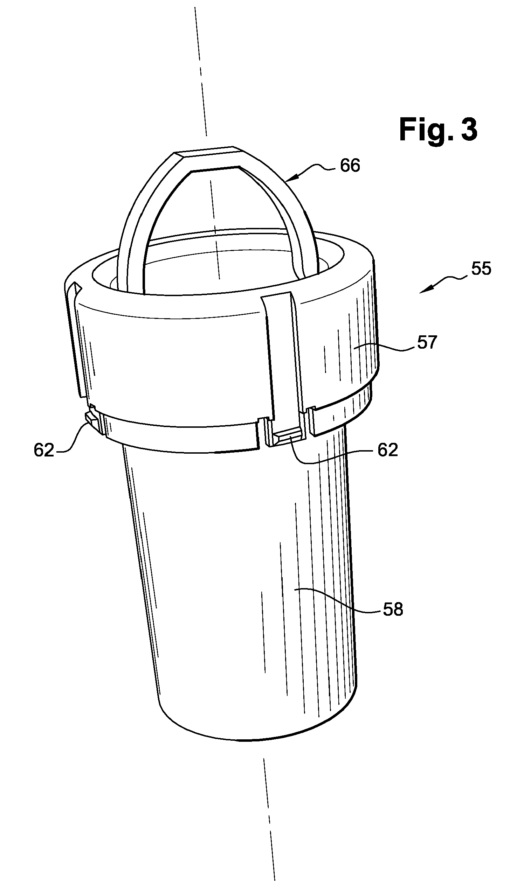

Conformément aux enseignements de l'invention, un capot 55 amovible, qui est représenté en détail sur la figure 3, est agencé sur le module de commande sous volant 10 de manière à envelopper le tronçon d'extrémité axiale supérieure 56 du manchon d'indexation 38. Le capot 55 a une forme tubulaire d'axe A1 et comporte une cloison axiale externe 57 qui est insérée axialement entre le rotor 28 et le manchon d'indexation 38, et une cloison axiale interne 58 qui s'étend le long de la paroi axiale interne du manchon d'indexation 38. Les extrémités axiales supérieures des deux cloisons 57, 58 sont liées par une paroi radiale annulaire 60.

Avantageusement, la cloison interne 58 s'étend axialement jusqu'à l'extension tubulaire inférieure 22 du boîtier 14 de manière à empêcher tout accès au manchon d'indexation 38 et de manière à faciliter le guidage en alignement du module 10 de commande sous volant sur la colonne de direction 12.

Comme on peut le voir notamment sur la figure 3, la cloison externe 57 du capot 55 est pourvu d'ergots ou clips de fixation 62 qui coopèrent avec des logements 64 complémentaires agencés dans le bord périphérique interne du rotor 28 pour maintenir par emboîtement le capot 55 sur le rotor 28.

Avantageusement, l'extrémité axiale supérieure du capot 55 est munie d'une anse 66 permettant d'exercer, par exemple manuellement, une traction axiale vers le haut pour retirer le capot 55 du module 10 et ainsi libérer le manchon d'indexation 38 pour permettre le montage du volant sur la colonne de direction 12.

Une méthode d'assemblage du module 10 de commande sous volant selon l'invention comprend les étapes suivantes :
- assemblage du boîtier avec le contacteur électrique rotatif et le manchon d'indexation, le rotor étant alors indexé radialement par rapport au stator grâce au manchon d'indexation,
- insertion axiale du capot 55 sur le manchon d'indexation jusqu'à emboîtement des ergots de fixation dans les logements complémentaires.

On dispose à ce stade d'un module de commande sous volant dans lequel l'accès au manchon d'indexation est empêché par le capot 55.

Le module de commande peut ainsi être acheminé jusqu'à la ligne de fabrication où il est monté sur la colonne de direction sans risque de déplacement accidentel du manchon d'indexation, donc sans risque de décalage angulaire entre le rotor et le stator par rapport à la position médiane désirée.

La méthode d'assemblage du module 10 sur la colonne de direction comprend les étapes suivantes :
- montage axial du module 10 sur le tronçon d'extrémité axiale supérieure de la colonne de direction, la cloison interne du capot 55 contribuant au guidage axial et à l'alignement axial du module 10 par rapport à la colonne,
- retrait du capot par traction exercée sur le capot au moyen de l'anse,
- montage du volant sur la colonne par insertion axiale par le haut, à travers le module 10, ce qui provoque le coulissement axial du manchon d'indexation vers une position neutre dans laquelle le doigt d'indexation ne coopère plus avec l'encoche associée du stator.

## Revendications

1. Module (10) de commande sous volant prévu pour être assemblé sur une colonne de direction (12), notamment de véhicule automobile, comportant un boîtier (14) sur lequel est monté un contacteur électrique rotatif (16) qui comprend un rotor (28) et un stator (26), du type comportant un manchon d'indexation angulaire (38) qui est mobile entre une position d'indexation dans laquelle il bloque le rotor dans une position angulaire déterminée par rapport au stator, et une position neutre dans laquelle le rotor peut tourner par rapport au stator,
**caractérisé en ce qu'**il comporte un capot amovible (55) qui est agencé sur le module (10) de commande sous volant de manière à envelopper le tronçon d'extrémité axiale supérieure (56) du manchon d'indexation (38) en vue d'empêcher l'accès au manchon d'indexation (38).

2. Module selon la revendication précédente, **caractérisé en ce que** le capot (55) comporte des moyens d'emboîtement (62) pour sa fixation de manière amovible sur un élément (28) du module (10) de commande.

3. Module selon la revendication précédente, **caractérisé en ce que** les moyens d'emboîtement (62) coopèrent avec des moyens complémentaires (64) agencés sur le contacteur électrique rotatif (16).

4. Module selon la revendication précédente, **caractérisé en ce que** les moyens d'emboîtement sont agencés sur une cloison tubulaire externe (57) du capot (55) qui est insérée axialement entre le rotor et le manchon d'indexation.

5. Module selon l'une quelconque des revendications précédentes, **caractérisé en ce que** le capot (55) comporte des moyens de guidage axial (58) qui coopèrent avec une portion de la colonne de direction (12) pour guider le module lors de son assemblage sur la colonne de direction.

6. Module selon la revendication précédente, **caractérisé en ce que** les moyens de guidage axial sont constitués par une cloison tubulaire interne (58) qui est prévue pour coopérer avec une portion de la colonne de direction (12).

7. Module selon l'une quelconque des revendications précédentes, **caractérisé en ce que** le capot comporte un moyen de préhension (66) permettant d'exercer une traction sur le capot (55) pour le retirer du module (10).

8. Méthode d'assemblage d'un module de commande sous volant et d'un volant sur une colonne de direction, le module de commande sous volant étant réalisé selon l'une quelconque des revendications précédentes, **caractérisée en ce qu'**elle comporte les étapes suivantes :
- montage axial du module sur le tronçon d'extrémité axiale supérieure de la colonne de direction en utilisant le capot comme moyen de guidage axial et d'alignement axial du module par rapport à la colonne,
- retrait du capot,
- montage du volant sur la colonne en faisant coulisser axialement le manchon d'indexation vers sa position neutre libérant le rotor en rotation.
